# EUROPEAN PATENT SPECIFICATION

(11) **EP 2 166 806 B1**
(45) Date of publication and mention of the grant of the patent: **04.11.2015**
(21) Application number: 08290890.6
(22) Date of filing: 19.09.2008
(51) Int. Cl.: H04W 72/04

(54) **Codes resource management method and apparatus for implementing the method**
Verfahren zur Verwaltung von Coderessourcen und Vorrichtung zur Implementierung des Verfahrens
Procédé de gestion de ressources de codes et appareil pour la mise en oeuvre du procédé

(43) Date of publication of application: 24.03.2010
(73) Proprietor: ALCATEL LUCENT, 92100 Boulogne-Billancourt (FR)
(72) Inventor: Stephen, Virginie, 91440 Bures sur Yvette (FR); Baudry, Benjamin, 78960 Voisins (FR)
(74) Representative: Berthier, Karine

(56) References cited:
- US-A1- 2002 141 331
- US-A1- 2006 176 839
- US-A1- 2007 259 668

## Description

The present invention relates to a method for managing code resources, to a network element, to a base station and to a computer program product.

The term "radio terminal" as used herein refers to any type of fixed or mobile (or portable) communication terminal capable of exchanging data with a radio-communication network on a radio communication link. Consequently, it may be, among other things, a telephone or desktop computer connected to a local router or server and equipped with a radio communication interface; a mobile telephone; a laptop computer or personal digital assistant (or PDA) equipped with a radio communication interface; a server or local router equipped with a radio communication interface; a high-frequency radio receiver; or a terrestrial or satellite television receiver.

The infrastructure of a cellular network comprises base stations distributed over the territory of coverage so as to communicate with terminals situated in the zones, or cells, that they serve. In a CDMA system, the digital symbols transmitted, binary (.+-.1) or quaternary (.+-.1.+-.j), are multiplied by spreading codes composed of samples, called "chips", whose rate is greater than that of the symbols. Orthogonal or quasi-orthogonal spreading codes are allotted to various physical channels sharing the same carrier frequency, so as to allow each receiver to detect the sequence of symbols which is destined therefore, by multiplying the signal received by the corresponding spreading code.

In a UMTS system, the spreading code employed on a downlink physical channel is the product of a scrambling code assigned to the transmitting cell and of a "channellization" code. The scrambling codes are orthogonal from one cell to another. Several orthogonal scrambling codes may possibly be allocated to one and the same cell. The "channellization" codes serve to distinguish between various channels within a cell. When these channels have different symbol throughputs, these "channellization" codes exhibit different spreading factors (the spreading factor is the ratio of the chip rate to the symbol rate on the channel). They are then chosen from a set of OVSF codes which, for each scrambling code assigned to the cell, is organized according to a binary tree each stage of which corresponds to a possible value of the spreading factor. Each node in this tree represents a code and is associated with two daughter nodes with twice the spreading factor belonging to the next stage. In the last stage of the tree, the nodes (leaves) represent the codes of maximum spreading factor. Two OVSF codes of the binary tree fulfil the condition of orthogonality on condition that one is not a descendant of the other.

The allocation of the OVSF codes to the communication channels is controlled in such a way so as to comply with this condition of orthogonality between all the codes allocated at each instant. As the allocation to a channel of a code of the tree corresponding to a given node renders this node's ascendant (parent) and descendant (child) nodes unavailable for the allocation of codes to other channels, the allocation algorithm used will have a greater or lesser probability of leading to blockage situations, i.e. to situations where there are no longer any codes available for a new channel to be established although the maximum throughput capacity of the code tree has not been reached.

High speed downlink packet access (HSDPA) is a third generation mobile communications protocol that allows network space on a universal mobile telecommunication system to have higher data transfer speeds and capacity. The high speed downlink shared channel (HS-DSCH) uses adaptive modulation encoding, fast packet scheduling at the base station and fast re-transmission from the base station using the hybrid automatic repeat request (HARQ). HARQ uses incremental redundancy, where data is transmitted multiple times using different codings and saving corrupted packets that are used in a later time and combined with subsequent re-transmission, in order to recover and obtain an error free packet. The HS-DSCH downlink channel is shared between radio terminals using channel dependent scheduling and periodically transmits an indication of the downlink signal quality. The base station decides which users will be sent data on the following frame and how much data should be sent for each radio terminal. The modulation scheme encoding on a per radio terminal basis depends on the signal quality and cell usage. The schemes may vary from quadrature phase shift key in up to 16 quadrature amplitude modulation.

Document US 2006/0176839 A1 discloses a communication structure and method which allows connection-like and connectionless communications to be provided on a multiplexed link. The structure and method can make efficient use of available transmission capacity and/or network resources while providing for both types of communication. Connection-like communications can be provided by a channel having allocated bandwidth dedicated to the communication while connectionless communication can be provided by a shared channel through which data can be transmitted to subscribers. In particular, a method of allocating bandwidth resources to communication channels, namely shared channels and dedicated channels is provided.

Document US 2002/0141331 A1 discloses a method of downlink packet switching for use in a mobile telecommunications network having a plurality of base stations capable of communicating in corresponding uplink and downlink with a plurality of mobile terminals operating in a frequency division duplex (FDD) mode, wherein a downlink shared channel (DSCH) is used to carry user data and control information for the mobile terminals in a coverage area.

The independent claims of the present invention relate to a method for managing code resources according to Claim 1 and to a method for managing code resources according to Claim 5 and to a respectively corresponding network element (Claim 8) and base station (Claim 11) and to computer program products (Claims 13, 14 for performing respectively the steps of methods 1-4 and 5-7). Other advantageous embodiments are disclosed by the appended dependent claims.

One exemplary aspect of the present invention relates to a method for managing code resources, in a Code Division Multiple Access radio-communication infrastructure network comprising a network element capable of controlling calls between the infrastructure network and radio terminals, wherein said calls use code resources in a pool of code resources, and wherein at least some of said calls may use transmission on shared communication channels or transmission on dedicated communication channels, the method comprising the steps of defining a first set of codes as a subset of said pool of code resources, wherein said first set of codes comprises code resources available for calls which use transmission on shared communication channels; wherein, responsive to reception of a request for establishment of a new call which uses transmission on dedicated communication channels, allocating code resources to the new call wherein at least some of the allocated code resources are selected within the first set of codes.

One of the advantages of the embodiments is that they provide an optimized tradeoff between the system capacity, the number of calls that are admitted, and the shared channels throughput. The embodiments maximize the shared channels throughput by using all possible spreading factor codes that are not allocated for dedicated channel calls. Another advantage is that it can use different non-contiguous set of codes to send data on shared channels to other radio terminals. The embodiments do not require to keep some codes available, in order to allow admission of new dedicated channel calls, and there is no need for slow signaling procedures to reconfigure the shared channel codes, as the codes can be used immediately.

In one example, the method further comprises the step of determining a second set of codes as a subset of the first set of codes wherein the second set of codes does not include code resources previously allocated to or blocked by calls which use transmission on dedicated communication channels, and wherein the at least some of the allocated code resources are selected within the second set of codes.

In one example, the method further comprises the step of defining a third set of codes, which does not overlap with the first set of codes, and contains codes reserved for common transmission channels.

In one example, the method further comprising the step of sending a configuration message comprising information identifying the first set of codes.

According to another exemplary aspect, the invention proposes a method for managing code resources, in a Code Division Multiple Access radio-communication infrastructure network comprising a plurality of base stations capable of radio communicating with radio terminals and means for controlling the base stations, wherein calls between the infrastructure network and radio terminals use code resources in a pool of code resources, and wherein at least some of the calls may use transmission on shared communication channels or transmission on dedicated communication channels.

The method of the invention comprises the steps of receiving a configuration message defining a first set of codes which is a subset of the pool of code resources, wherein the first set of codes comprises code resources available for calls which use transmission on shared communication channels; using the code resources of the first set of codes for calls which use transmission on shared communication channels, receiving a code resource allocation message for a new call which uses transmission on dedicated communication channels, wherein at least some of the code resources allocated to the new call are selected within the first set of codes, and updating the first set of codes by removing the code resources allocated to the new call.

In one embodiment, the method further comprises the steps of: receiving a code resource relinquish message for the new call; and updating the first set of codes by adding the code resources relinquished related to the new call.

In a further example, the codes are orthogonal variable spreading factor codes. Furthermore, the codes in the first set of codes may also advantageously share a common spreading factor, i.e. all be of the same spreading factor.

According to another exemplary aspect, the invention proposes a network element for managing code resources for a Code Division Multiple Access radio-communication infrastructure network, the network element capable of controlling calls between the infrastructure network and radio terminals, wherein the calls use code resources in a pool of code resources, and wherein at least some of the calls may use transmission on shared communication channels or transmission on dedicated communication channels. The network element comprises: means for defining a first set of codes as a subset of the pool of code resources, wherein the first set of codes comprises code resources available for calls which use transmission on shared communication channels; and means for allocating code resources to a new call, the means for allocating adapted for responding to reception of a request for establishment of the new call which uses transmission on dedicated communication channels, wherein at least some of the allocated code resources are selected within the first set of codes.

In one example, the network element further comprises means for determining a second set of codes as a subset of the first set of codes, wherein the second set of codes does not include code resources previously allocated to or blocked by calls which use transmission on dedicated communication channels, and wherein the at least some of the allocated code resources are selected within the second set of codes.

In a further example, the network element further comprises means for defining a third set of codes, which does not overlap with the first set of codes, and contains codes reserved for common transmission channels.

According to another example, the invention proposes a base station capable of radio communicating with radio terminals for a Code Division Multiple Access radio-communication infrastructure network further comprising a network element for controlling the base station, wherein calls between the infrastructure network and radio terminals use code resources in a pool of code resources, and wherein at least some of the calls may use transmission on shared communication channels or transmission on dedicated communication channels.

The base station comprises means for receiving a configuration message defining a first set of codes which is a subset of the pool of code resources, wherein the first set of codes comprises code resources available for calls which use transmission on shared communication channels; means for using the code resources of the first set of codes for calls which use transmission on shared communication channels; means for receiving a code resource allocation message for a new call which uses transmission on dedicated communication channels, wherein at least some of the code resources allocated to the new call are selected within the first set of codes; and means for updating the first set of codes by removing the code resources allocated to the new call.

In one example, the base station further comprises: means for receiving a code resource relinquish message for the new call; means for updating the first set of codes by adding the code resources relinquished related to the new call. The codes are orthogonal variable spreading factor codes. The codes in the first set of codes share a common spreading factor.

According to another example, the invention proposes a computer program product stored on a storage medium, comprising executable program means for causing an information processor within a network element to perform a method according to any of the preceding examples when the program is run on the network element.

According to another example, the invention proposes a computer program product stored on a storage medium, comprising executable program means for causing an information processor within a base station to perform a method according to any of the preceding examples when the program is run on the base station.

In the following, preferred embodiments of the invention will be described in greater detail by way of example only making reference to the drawings in which:
- Figure 1: is a block diagram of a wireless communication system in which the invention may be implemented,
- Figure 2: is a representation of the codes allocation in a codes tree,
- Figure 3: is a further representation of a set of configure codes,
- Figure 4: is a flowchart of the method according to the embodiments,
- Figure 5: is a flowchart of the method according to another embodiment.

The word "exemplary" is used exclusively herein to mean "serving as an example, instance, or illustration." Any embodiment described herein as "exemplary" is not necessarily to be construed as preferred or advantageous over other embodiments. Note that the exemplary embodiments are provided as an exemplar throughout this discussion; however, alternate embodiments may incorporate various aspects without departing from the scope of the present invention.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Moreover, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the present description, the invention will be described more particularly in its application, non limiting, to third generation radio communication networks of the UMTS type which provides data communication according to the HSDPA service, without thereby restricting the generality of its subject matter.

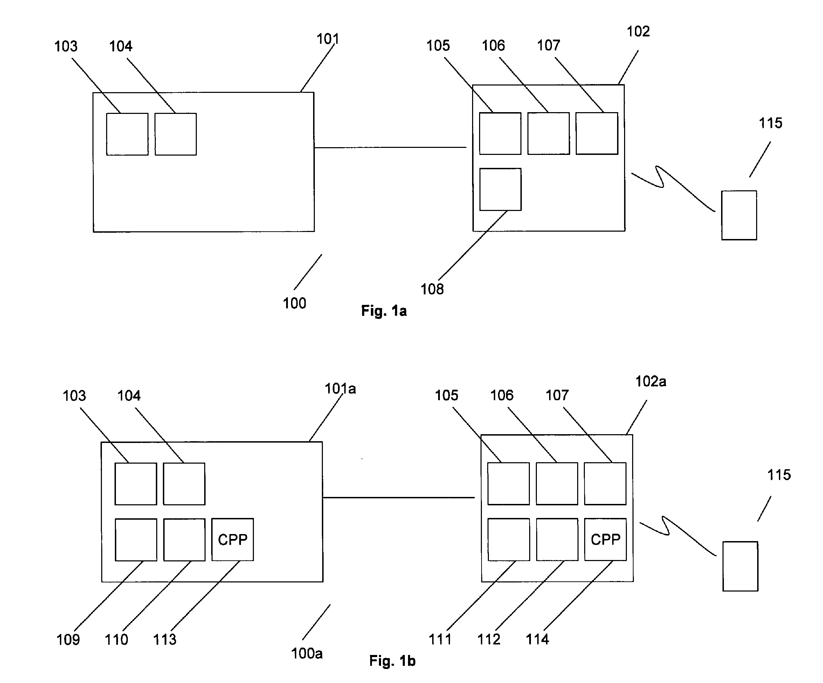

Fig. 1 a shows a radio-communication network 100 of the UMTS type comprising control equipments 101, or "Radio Network Controller" (RNC). Each RNC 101 is coupled to one or several base station (also called, in a UMTS radio access network, "Node-B") 102, by means of an interface referred to as *lub* interface. The Node-Bs 102, which are distributed over the geographical area covered by the network 100, are capable of communicating via the radio interface with radio terminals 115, referred to as UE ("User Equipments"). The Node-Bs 102 may each provide radio coverage in one or several cells by means of respective transmiter-receiver equipments. Some RNCs 101 may further communicate with each other by means of an interface referred to as the *lur* interface. The network formed by the RNCs 101 and the Node-Bs 102 is a radio access network referred to as UTRAN ("UMTS Terrestrial Radio Access Network"). The UTRAN is typically coupled to a network of mobile service switches (referred to as "Core Network" (CN)) via some RNCs 101, by means of an interface referred to as the *lu* interface. The core network may in turn be coupled to one or several fixed networks.

The UTRAN comprises elements of layers 1 and 2 of the ISO model with a view to providing the links required on the radio interface (called Uu), and a stage for controlling the radio resources (RRC, "Radio Resource Control") belonging to layer 3, as is described in the 3G TS 25.301 technical specification "Radio Interface Protocol" version 7.4.0 published in March 2008 by the 3GPP. In view of the higher layers, the UTRAN acts simply as a relay between the UE and the CN.

Layers 1 and 2 are each controlled by the RRC sublayer, whose characteristics are described in the TS 25.331 technical specification "RRC Protocol Specification", version 7.9.1 published in August 2008 by the 3GPP. The RRC stage supervises the radio interface, and also processes streams to be transmitted to the remote station according to a "control plan", as opposed to the "user plan" which corresponds to the processing of the user data arising from layer 3.

In the UMTS jargon, a session of data transfer between a UE and the core network is called a "radio access bearer" (RAB). The RAB is defined with general attributes such as a class of quality of service (QoS), a maximum throughput, a guaranteed throughput, sizes of data units, an error rate, a transfer delay, etc. During the installation of an RAB, the RNC 101 is responsible for establishing a "radio bearer" (RB) for transferring user data between the UTRAN and the UE 115.

The parameters of the RB, which are not known to the core network, are a translation of the attributes of the RAB as a function of the capacities available to the UTRAN. They correspond to one or more transport channels each having a type, a mode of transfer (packet switching or circuit mode), a throughput, etc. The transposition of the logical channels arising from the RAB onto the transport channels thus defined is ensured by a MAC layer. The physical layer is then responsible for transposing the transport channels onto physical channels.

In general, the RNC will be configured to be able to establish RBs having a certain number of different types so as to adapt to the RABs requested. With its serving RNC, an active UE maintains an "RRC connection" through which it can exchange various signaling information items. The management of this RRC connection is described in section 8.1 of the aforesaid specification TS 25.331. Section 8.3 describes the mobility procedures involved within the framework of this RRC connection, in particular the way in which the RNC can update in respect of the UE an active set of cells with which there is a radio link. "Radio link" is understood here as the logical association between the UE and a cell. Such a link can support transmissions relating to one or more RBs, according to one or more physical channels. For each UE with which there is an RRC connection, the RNC knows the radio link or links in force.

The RB control procedures (setup, reconfiguration, release, etc.) are executed by the RNC in conjunction with the UE as described in section 8.2 of the aforesaid specification TS 25.331. The setup of an RB is requested by the RNC by means of the "RADIO BEARER SETUP" message (section 10.2.33 of the specification TS 25.331) and confirmed by the UE by means of the "RADIO BEARER SETUP COMPLETE" message (section 10.2.34). The release of an RB is requested by the RNC by means of the "RADIO BEARER RELEASE" message (section 10.2.30) and confirmed by the UE by means of the "RADIO BEARER RELEASE COMPLETE" message (section 10.2.31).

The RNC 101 is capable of controlling calls between the UTRAN and the UEs which use dedicated communication channels (also called hereinafter « DCH calls »), such as the DCH transport channel ("Dedicated Transport Channel"). The RNC 101 is also capable of controlling calls between the UTRAN and the UEs in the downlink direction according to the HSDPA service (also called hereinafter "HSDPA calls"), which calls use a shared communication channel referred to as HS-DSCH ("High Speed Downlink Shared Channel"). A detailed description of transport channels used in a UMTS system Release 6, among which in particular the dedicated communication channel DCH and the shared communication channel HS-DSCH, can be found in the specification 3GPP TS 25.211, entitled "Physical channels and mapping of transport channels onto physical channels (FDD), Release 6", version 6.9.0., published by the 3GPP in November 2007, and in the specification 3GPP TS 25.302, entitled "Services provided by the physical layer (Release 6)", version 6.8.0., published by the 3GPP in September 2006.

The radio network controller 101 comprises means for defining 103 a first set of codes as a subset of the pool of code resources and means for allocating 104 code resources to a new call. This first set of codes may be chosen to be the pool of code resources (which represents the maximum amount of code resources which the RNC may allocate to transport channels) without the code resources allocated to common control transport channels. This provides the RNC with the maximum set of code resources available for communication transport channels.

The first set of codes comprises code resources available for calls using transmission on shared communication channels (for instance an HSDPA call which would use the HS-DSCH downlink transport channel). In other words, the RNC 101 « configures » all the codes in the subset of codes available for communication transport channels as codes available for communications using shared transport channels. This avoids any fixed or initial partitioning of the subset of the code resources available for communication transport channels in sets of code resources dedicated to communications using shared transport channels and sets of code resources dedicated to communications using dedicated transport channels. All codes resources of the subset of code resources available for communication transport channels are initially considered available for both communications using shared transport channels and communications using dedicated transport channels.

This configuration of code resources as codes available for communications using shared transport channels may be communicated by the RNC 101 to the Node-B 102 using a "NBAP PHYSICAL SHARED CHANNEL RECONFIGURATION" message of the NBAP protocol specified by the 3GPP (TS 25.433, entitled "UTRAN lub interface Node B Application Part (NBAP) signalling", version 7.9.0., published in June 2008 by the 3GPP) . For instance, for calls according to the HSDPA service, knowing that the code resources which may be allocated to HSDPA calls are codes of spreading factor 16 (SF16), the RNC 101 may send to the Node-B 102 a NBAP PHYSICAL SHARED CHANNEL RECONFIGURATION message which informs the Node-B 102 that all SF16 codes may be allocated to HSDPA calls, except for the ones allocated to UMTS common control channel (such as the pilot channel CPICH). Such a configuration message may be sent to the Node-B 102 during its setup phase.

The means 104 for allocating are adapted for responding to reception of a request for establishment of the new call which uses transmission on dedicated communication channels. The code resources allocated to the requested new call which uses transmission on dedicated communication channels (for instance a call on a DCH transport channel) are selected within the set of codes which were configured as codes potentially available for calls which uses transmission on shared communication channels. The RNC 101 may then pre-empt any code resource which have been configured as shared channel code resource when allocating code resource to a dedicated channel call. This process of determining the set of code resources potentially available for calls which uses transmission on shared communication channels which can be pre-empted for allocating code resource to a dedicated channel call may be run in a loop mode, since the set of codes which were configured as codes potentially available for calls which uses transmission on shared communication channels continuously evolve depending on the resources allocated to or blocked by calls using transmission on a dedicated channel. Indeed, upon receipt of a request for a new call which uses transmission on dedicated communication channels, the RNC 101 may not want to pre-empt code resources which have been allocated to (and are still used by) calls which uses transmission on dedicated communication channels, or use (in order to comply with the code orthogonality requirement described above) code resources blocked by calls which uses transmission on dedicated communication channels, i.e. code resources for which at least a parent code or a child code in the OVSF code tree is allocated to (and are still used by) a call which uses transmission on dedicated communication channels. The RNC 101 may therefore determine a second set of codes, which is a subset of the first set of codes, which does not include any code already allocated or blocked by a dedicated channel call. This second set of codes will include the code resources that are available for allocation of resources to a new dedicated channel call.
When a DCH call is admitted in a cell of the Node-B 102, an OVSF code is allocated by the controlling RNC 101 to this call anywhere in the OVSF code tree and potentially in the set of code resources which have been configured as HSDPA codes. This code is communicated to the Node-B 102 by means of a NBAP message such as the "NBAP RADIO LINK SETUP" message, or the "NBAP RADIO LINK RECONFIGURATION" message. When the DCH call is finished, the code is relinquished (or "freed", or « released ») by the controlling RNC 101, which is also communicated to Node B 102 by means of a NBAP message such as the "NBAP RADIO LINK RECONFIGURATION" message, or the "NBAP RADIO LINK DELETION" message. The allocated code may also be reconfigured, and therefore change, during the call, which would also be communicated to the Node-B 102 by means of a NBAP message.

Each time the Node B 102 receives an indication of allocation, release or reconfiguration of an OVSF code, it checks which SF16 codes (amongst the ones configured by the RNC 101 at cell setup as HS-PDSCH codes, i.e. codes that may be allocated and used by calls using an HS-PDSCH physical shared channel) are blocked by DCH calls. The ones that are not blocked can be used by Node B's MAC-hs scheduler to send data to HSDPA mobile terminals.

The base station 102 comprises means for receiving 105 a configuration message defining a first set of codes which is a subset of the pool of code resources, means for using 106 the code resources of the first set of codes for calls which use transmission on shared communication channels, means for receiving 107 a code resource allocation message for a new call which uses transmission on dedicated communication channels and means for updating 108 the first set of codes by removing the code resources allocated to the new call.

The base station is capable of radio communication with radio terminals in a Code Division Multiple Access radio-communication infrastructure network. The network may further comprise a plurality of base stations and a network element for controlling the base stations. The call between the infrastructure network and the radio terminals use code resources in a pool of code resources. At least some of the calls may use transmission on shared communication channels or transmission on dedicated communication channels.

Fig 1b shows a Code Division Multiple Access radio-communication network 100a containing all the elements of the Code Division Multiple Access radio-communication infrastructure network 100, including a radio network controller 101 a coupled to a base station 102a and the radio terminal 115.

The radio network controller 101 a includes all the elements of the network element 101 and further comprises: means for determining 109 a second set of codes as a subset of the first set of codes. The radio network controller 101 a may further comprise means for defining 110 a third set of codes.

Further, the radio network controller 101 a may further comprise a computer program product 113 stored on a storage medium, comprising executable program means for causing the radio network controller to perform a method according to any of the embodiments when the program is run on the radio network controller.

The second set of codes does not include code resources previously allocated to or blocked by calls which use transmission on dedicated communication channels. At least some of the allocated code resources are selected within the second set of codes. Further, the third set of codes does not overlap with the first set of codes and contains codes reserved for common transmission channels.

The base station 102a includes all the elements of the base station 102 and further comprises: means for receiving 111 a code resource relinquish message for the new call; and means for updating 112 the first set of codes by adding the code resource relinquished to the new call. The codes are orthogonal variable spreading factor codes. Further, the codes in the first set of codes share a common spreading factor.

Further, the base station 101a may further comprise a computer program product 114 stored on a storage medium, comprising executable program means for causing the base station to perform a method according to any of the embodiments when the program is run on the base station.

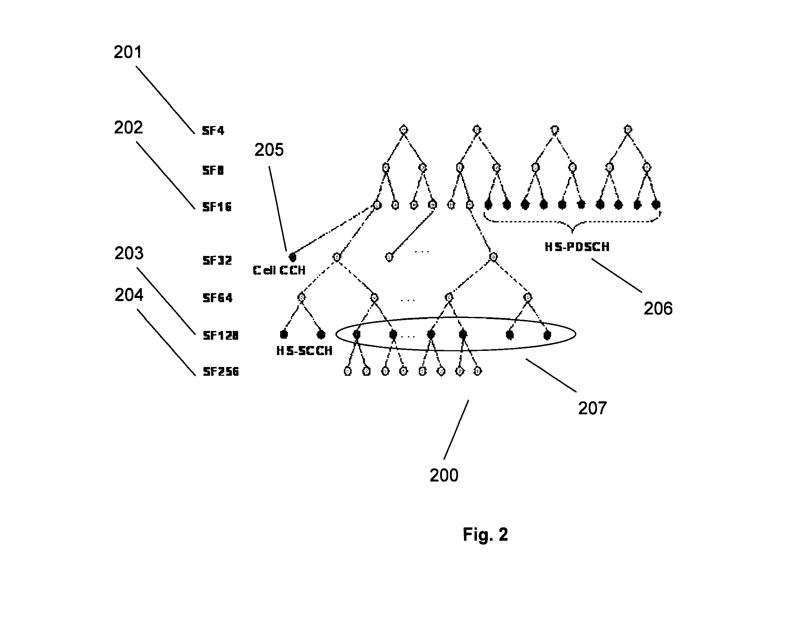

Fig. 2 shows a representation of a tree of codes 200 showing the codes of spreading factor 4 201, spreading factor 16 202, spreading factor 128 203 up to a spreading factor 256. For each code N of spreading factor P, there is one parent code in the tree of spreading factor P/2, and there are two children of spreading factor 2 multiplied by P. When a code is allocated, all of its parents and all of its children are blocked, in order to avoid interferences, as only codes that do not have a parent-child relationship are orthogonal and thus do not interfere. These blocked codes cannot be allocated to other calls.

The shared channel codes, represented in the fig. 2 as the HS-PDSCH are a contiguous set of codes and spreading factor 16 codes. The common channel code 205 is configured as a spreading factor 32 code. The shared control channels 206 are allocated as spreading factor 128 codes.

In a given transmission interval, when sending data to a given radio terminal using the shared channels, the data requires to be sent in contiguous codes, as shown in fig. 2 with the HS-PDSCH set of codes. If any other codes are available for transmission as shared channels, and these codes are not contiguous to a first set of contiguous codes, the second set of contiguous codes cannot be used for transmission to the same radio terminal as the first set of contiguous codes.

On initial configuration, a radio network controller can for example configure the spreading factor 16 codes as follows: number 1 for common channels and number 2-16 as shared channels. If an incoming call request arrives and is mapped onto a dedicated channel, the incoming call may use the code number 2 as a dedicated channel code. The base station or node B can then use the codes number 3-16 as shared channel codes. Then, if a second dedicated channel call arrives and is allocated into the code number 3, the base station or node B can use the codes number 4-16 as shared channel codes.

If the first call finishes and the code number 2 is released, the base station can use the code number 2 and the codes number 4-16 for transmissions into the shared channels. In a given transmission interval, the code number 2 is used for transmission into a first radio terminal, and the codes number 4-16 are used for transmission to a second radio terminal.

In fig. 2, a set of dedicated channel codes 207 have a spreading factor of 128, and as it can be seen none of their parent codes are used for transmission to any other channel.

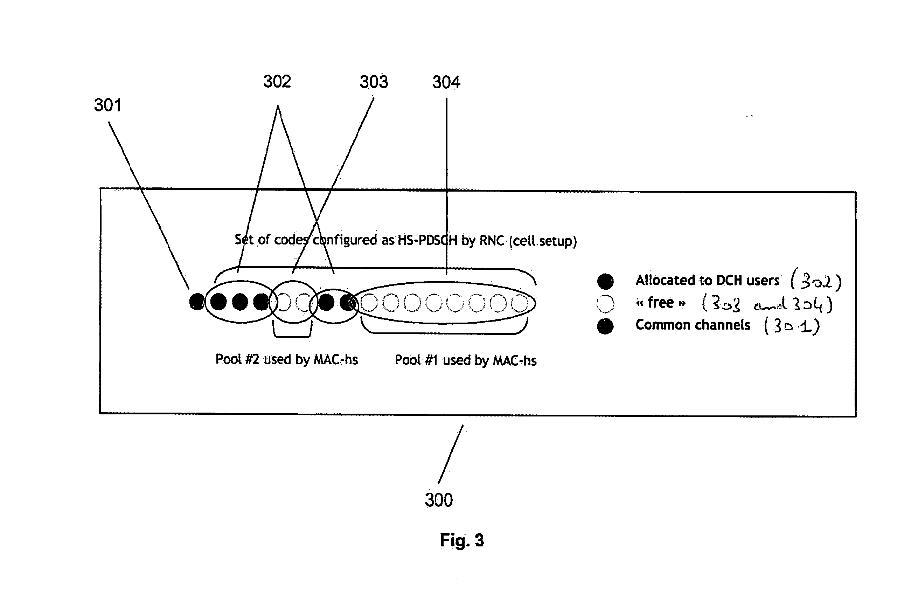

Fig. 3 shows a representation 300 of orthogonal variable spreading factor codes. Code number 1 is allocated for common channels and therefore cannot be used for any other of the dedicated or shared calls. Initially, the codes number 2-16 are configured for shared channels until a first incoming call request is mapped into a dedicated channel, and one of the shared channels needs to be reconfigured as a dedicated channel code. In fig. 3, the codes number 2, 3, 4, as well as the codes number 7 and 8 are allocated for dedicated channel calls. The codes number 5 and 6 represent a first set of contiguous codes. The codes number 9-16 represent a second set of contiguous codes. Both first and second set of contiguous codes can be used for shared channel transmissions.

The embodiments consider the orthogonal variable spreading factor tree as a single pool of resources, where the codes can be allocated either for dedicated channel calls or for shared channel calls in any position. During cell setup, a certain number of codes are configured as shared channel codes, using for example a physical shared channel reconfiguration. When a dedicated channel call is allowed in the cell, a code is allocated in the part of the tree where the shared channel codes had been configured at the cell setup. The radio network controller may limit the number of dedicated channel calls to a certain number of codes reserved for shared channel calls. This number may be computed at call admission according to quality of service and characteristics requested for the different services.

When the call is finished, the code is relinquished by the radio network controller or the base station using any radio link reconfiguration procedure. Each time the base station receives an allocation, release or reconfiguration procedure, it identifies what codes are blocked by dedicated channel calls, and the available codes are used to send data to the radio terminals using the shared channels.

One of the advantages of the embodiments is that it provides an optimized tradeoff between the system capacity, the number of calls that are admitted, and the shared channels throughput. The embodiments maximize the shared channels throughput by using all possible spreading factor codes that are not allocated to or blocked by dedicated channel calls. Another advantage is that it can use a non-contiguous set of spreading factor codes to send data to other radio terminals. The embodiments do not require to keep some spreading factor codes free, in order to allow admission of new dedicated channel calls, and there is no need for slow signaling procedures to reconfigure the shared channel codes, as the codes can be used immediately.

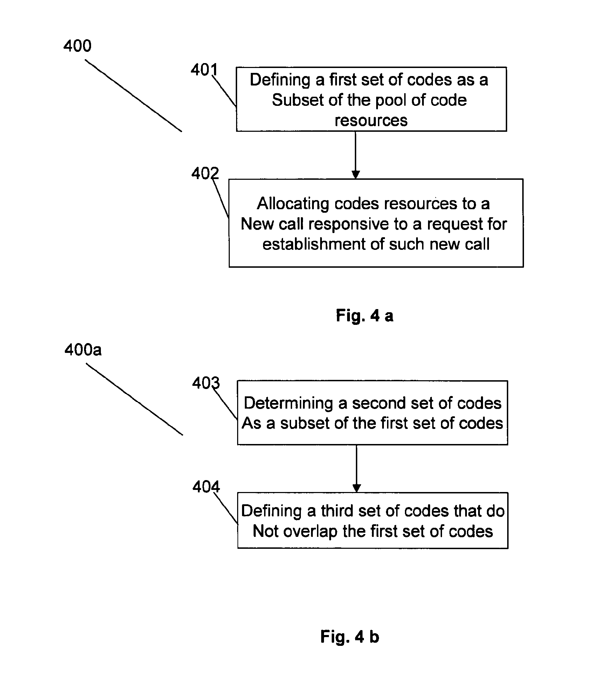

Fig. 4 a shows a flowchart 400 for a method for managing code resources in a Code Division Multiple Access radio-communication infrastructure network comprising a network element capable of controlling calls between the infrastructure network and radio terminals. The method comprises the steps of: defining a first set of codes as a subset of the pool of code resources in a first step 401 and responsive to reception of a request for establishment of a new call which uses transmission on dedicated communication channels, allocating code resources to the new call in a second step 402.

The calls use code resources in a pool of code resources and at least some of the calls may use transmission on shared communication channels or transmission on dedicated communication channels. Further, the first set of codes comprises code resources available for calls using transmission on shared communication channels. At least some of the allocated code resources are selected within the first set of codes.

Fig 4 b shows a flowchart 400a of an embodiment of the method for managing code resources and following the initial method steps of the flowchart 400. The flowchart 400a comprises the steps of: determining a second set of codes as a subset of the first set of codes in a first step 403 and defining a third set of codes, which does not overlap with the first set of codes, and contains codes reserved for common transmission channels in a second step 404.

The second set of codes does not include code resources previously allocated to or blocked by calls which use transmission on dedicated communication channels. Further, the flowchart 400a may further comprise the step of sending a configuration message comprising information identifying the first set of codes.

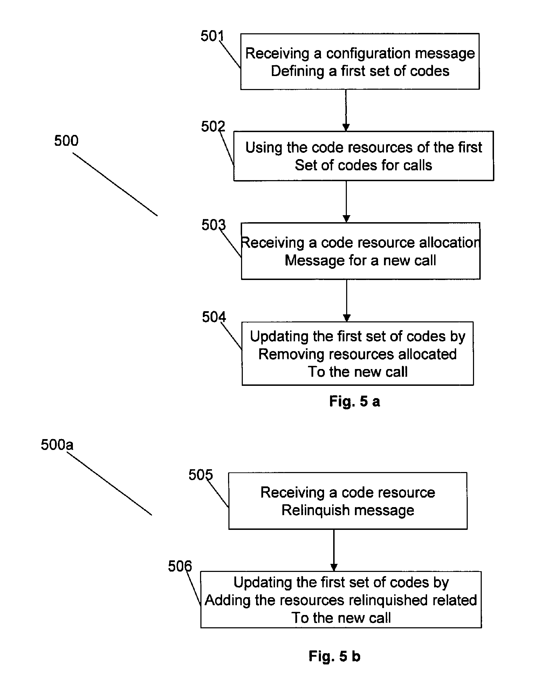

Fig. 5 a shows a flowchart 500 of a method for managing code resources, in a Code Division Multiple Access radio-communication infrastructure network comprising a plurality of base stations capable of radio communicating with radio terminals and a network element for controlling the base stations.

The flowchart 500 comprises the steps of: receiving a configuration message defining a first set of codes which is a subset of the pool of code resources in a first step 501, using the code resources of the first set of codes for calls which use transmission on shared communication channels in a second step 502, receiving a code resource allocation message for a new call which uses transmission on dedicated communication channels in a third step 503 and updating the first set of codes by removing the code resources allocated to the new call in a fourth step 504.

The calls between the infrastructure network and radio terminals use code resources in a pool of code resources and at least some of the calls may use transmission on shared communication channels or transmission on dedicated communication channels. The first set of codes comprises code resources available for calls which use transmission on shared communication channels. Further, at least some of the code resources allocated to the new call are selected within the first set of codes.

Fig 5 b shows a flowchart 500a of an embodiment of the method for managing code resources and following the initial method steps of the flowchart 500. The flowchart 500a comprises the steps of: receiving a code resource relinquish message for the new call in a first step 505; and updating the first set of codes by adding the code resources relinquished related to the new call in a second step 506.

### List of Reference Numerals

- 100: Radio-communication infrastructure network
- 101: Radio network controller
- 102: Base station
- 103: Means for defining
- 104: Means for allocating
- 105: Means for receiving
- 106: Means for using
- 107: Means for receiving
- 108: Means for updating
- 109: Means for determining
- 110: Means for defining
- 111: Means for receiving
- 112: Means for updating
- 113: Computer Program Product
- 114: Computer Program Product
- 200: Representation of a codes tree
- 201: Spreading factor 4 codes
- 202: Spreading factor 16 codes
- 203: Spreading factor 128 codes
- 204: Spreading factor 256 codes
- 205: Common channel codes
- 206: Set of shared channel codes
- 207: Set of dedicated channel calls
- 300: Tree of codes
- 301: Common channel code
- 302: Dedicated channel codes
- 303: First set of contiguous codes
- 304: Second set of contiguous codes
- 400: Flowchart
- 401: First step
- 402: Second step
- 403: First step
- 404: Second step
- 500: Flowchart
- 501: First step
- 502: Second step
- 503: Third step
- 504: Fourth step
- 505: First step
- 506: Second step

## Claims

1. A method for managing code resources, in a Code Division Multiple Access radio-communication infrastructure network (100) comprising a network element (101) capable of controlling calls between the infrastructure network (100) and radio terminals (115), wherein said calls use code resources in a pool of code resources, and wherein at least some of said calls may use transmission on shared communication channels or transmission on dedicated communication channels, the method comprising the steps of:
- defining (401) a first set of codes as a subset of said pool of code resources, wherein said first set of codes comprises code resources available for calls which use transmission on shared communication channels;
- responsive to reception of a request for establishment of a new call which uses transmission on dedicated communication channels, allocating (402) code resources to the new call wherein at least some of the allocated code resources are selected within said first set of codes,**characterized in that** the method further comprises:
- in order to avoid any fixed or initial partitioning of the subset of the code resources available for communication transport channels in sets of code resources dedicated to communications using shared communication channels and sets of code resources dedicated to communications using dedicated communication channels, all codes resources of the subset of code resources available for communication transport channels are initially considered available for both communications using shared transport channels and communications using dedicated transport channels;
- using by the shared channel all codes that are not allocated to or blocked by calls which use transmission on dedicated channels;
- receiving a code resource relinquish message for said new call;
- updating the first set of codes by adding the code resources relinquished related to said new call;
- identifying what codes are blocked by dedicated channel calls each time the network element ( 101) receives an allocation, release or reconfiguration procedure, and the available codes are used to send data to the radio terminals using the shared channel.

2. A method according to claim 1, further comprising the step of determining (402) a second set of codes as a subset of the first set of codes wherein said second set of codes does not include code resources previously allocated to or blocked by calls which use transmission on dedicated communication channels, and wherein said at least some of the allocated code resources are selected within said second set of codes.

3. A method according to any of claim 1 or 2, further comprising the step of defining (403) a third set of codes, which does not overlap with the first set of codes, and contains codes reserved for common transmission channels.

4. A method according to any one of claim 1 or 2, further comprising the step of sending a configuration message comprising information identifying said first set of codes.

5. A method for managing code resources, in a Code Division Multiple Access radio-communication infrastructure network (100) comprising a plurality of base stations (102) capable of radio communicating with radio terminals (115) and means for controlling said base stations (101), wherein calls between the infrastructure network (100) and radio terminals use code resources in a pool of code resources, and wherein at least some of said calls may use transmission on shared communication channels or transmission on dedicated communication channels, the method comprising the steps of:
- receiving (501) a configuration message defining a first set of codes which is a subset of said pool of code resources, wherein said first set of codes comprises code resources available for calls which use transmission on shared communication channels;
- using (502) the code resources of the first set of codes for calls which use transmission on shared communication channels;
- receiving (503) a code resource allocation message for a new call which uses transmission on dedicated communication channels, wherein at least some of the code resources allocated to the new call are selected within the first set of codes;
- updating (504) the first set of codes by removing the code resources allocated to the new call,
**characterized in that** the method further comprises:
- in order to avoid any fixed or initial partitioning of the subset of the code resources available for communication transport channels in sets of code resources dedicated to communications using shared communication channels and sets of code resources dedicated to communications using dedicated communication channels, all codes resources of the subset of code resources available for communication transport channels are initially considered available for both communications using shared transport channels and communications using dedicated transport channels;
- using by the shared channel all codes that are not allocated to or blocked by calls which use transmission on dedicated channels;
- receiving (505) a code resource relinquish message for said new call;
- updating (506) the first set of codes by adding the code resources relinquished related to said new call;
- wherein a base station (102) identifies what codes are blocked by dedicated channel calls each time the base station (102) receives an allocation, release or reconfiguration procedure, and the available codes are used to send data to the radio terminals using the shared channel.

6. A method according to any of the previous claims, wherein the codes are orthogonal variable spreading factor codes.

7. A method according to any of the previous claims, wherein the codes in the first set of codes share a common spreading factor.

8. A network element (101) (101) for managing code resources for a Code Division Multiple Access radio-communication infrastructure network (100), the network element capable of controlling calls between the infrastructure network (100) and radio terminals (115) (115), wherein said calls use code resources in a pool of code resources, and wherein at least some of said calls may use transmission on shared communication channels or transmission on dedicated communication channels, the network element comprising:
- means for defining (103) a first set of codes as a subset of said pool of code resources, wherein said first set of codes comprises code resources available for calls which use transmission on shared communication channels;
- means for allocating (104) code resources to a new call, the means for allocating is adapted for responding to reception of a request for establishment of the new call which uses transmission on dedicated communication channels, wherein at least some of the allocated code resources are selected within said first set of codes;
- means for using by the shared channel all codes that are not allocated to or blocked by calls which use transmission on dedicated channels;
**characterized in that**,
the network element further comprises:
means arranged to avoid any fixed or initial partitioning of the subset of the code resources available for communication transport channels in sets of code resources dedicated to communications using shared communication channels and sets of code resources dedicated to communications using dedicated communication channels,
means arranged to initially considering all codes resources of the subset of code resources available for communication transport channels available for both communications using shared transport channels and communications using dedicated transport channels;
- means arranged to identifying what codes are blocked by dedicated channel calls each time the network element receives an allocation, release or reconfiguration procedure, and for using the available codes to send data to the radio terminals using the shared channel.

9. The network element according to claim 8 further comprising: means for determining (109) a second set of codes as a subset of the first set of codes, wherein said second set of codes does not include code resources previously allocated to or blocked by calls which use transmission on dedicated communication channels, and wherein said at least some of the allocated code resources are selected within said second set of codes.

10. The network element according to any of the claims 8 or 9 further comprising: means for defining (110) a third set of codes, which does not overlap with the first set of codes, and contains codes reserved for common transmission channels.

11. A base station (102) capable of radio communicating with radio terminals for a Code Division Multiple Access radio-communication infrastructure network (100) further comprising a network element for controlling said base station (102), wherein calls between the infrastructure network (100) and radio terminals use code resources in a pool of code resources, and wherein at least some of said calls may use transmission on shared communication channels or transmission on dedicated communication channels, the base station (102) comprising:
- means for receiving (105) a configuration message defining a first set of codes which is a subset of said pool of code resources, wherein said first set of codes comprises code resources available for calls which use transmission on shared communication channels;
- means for using (106) the code resources of the first set of codes for calls which use transmission on shared communication channels;
- means for receiving (107) a code resource allocation message for a new call which uses transmission on dedicated communication channels, wherein at least some of the code resources allocated to the new call are selected within the first set of codes;
- means for updating (108) the first set of codes by removing the code resources allocated to the new call,
- means for using by the shared channel all codes that are not allocated to or blocked by calls which use transmission on dedicated channels;
**characterized in that** the base station further comprises:
means arranged to avoid any fixed or initial partitioning of the subset of the code resources available for communication transport channels in sets of code resources dedicated to communications using shared communication channels and sets of code resources dedicated to communications using dedicated communication channels,
means arranged to initially considering all codes resources of the subset of code resources available for communication transport channels available for both communications using shared transport channels and communications using dedicated transport channels;
- means for receiving (111) a code resource relinquish message for said new call;
- means for updating (112) the first set of codes by adding the code resources relinquished related to said new call,
- means for identifying what codes are blocked by dedicated channel calls each time the base station (102) receives an allocation, release or reconfiguration procedure, and for using the available codes to send data to the radio terminals using the shared channel.

12. Base station (102) according to claim 11, wherein the codes are orthogonal variable spreading factor codes, wherein the codes in the first set of codes share a common spreading factor.

13. A computer program product (113) stored on a storage medium, comprising executable program means for causing an information processor within a network element to perform a method according to any of the preceding claims 1 to 4 when the program is run on the network element.

14. A computer program product (114) stored on a storage medium, comprising executable program means for causing an information processor within a base station (102) to perform a method according to any of the preceding claims 5 to 7 when the program is run on the base station (102).

## Patentansprüche

1. Verfahren zum Verwalten von Coderessourcen in einem Code-Division-Multiple-Access-Funkkommunikations-Infrastrukturnetzwerk (100), umfassend ein Netzwerkelement (101), das fähig ist, Anrufe zwischen dem Infrastrukturnetzwerk (100) und Funkendgeräten (115) zu steuern, wobei die besagten Anrufe Coderessourcen in einem Pool von Coderessourcen nutzen, und wobei mindestens einige der besagten Anrufe eine Übertragung auf geteilten Kommunikationskanälen oder eine Übertragung auf zugeordneten Kommunikationskanälen nutzen können, wobei das Verfahren folgende Schritte umfasst:
- Definieren (401) eines ersten Codesatzes als Teilsatz des besagten Pools von Coderessourcen, wobei der besagte erste Codesatz Coderessourcen umfasst, die für Anrufe verfügbar sind, die eine Übertragung auf geteilten Kommunikationskanälen nutzen;
- als Antwort auf den Empfang einer Anfrage für den Aufbau eines neuen Anrufes, der eine Übertragung auf zugeordneten Kommunikationskanälen nutzt, das Zuweisen (402) von Coderessourcen zu dem neuen Anruf, wobei mindestens einige der zugewiesenen Coderessourcen im besagten ersten Codesatz ausgewählt werden, **dadurch gekennzeichnet, dass** das Verfahren weiterhin Folgendes umfasst:
- um jegliche feste oder anfängliche Partitionierung des Teilsatzes der Coderessourcen zu vermeiden, die verfügbar sind für Kommunikationstransportkanäle in Sätzen von Coderessourcen, die Kommunikationen zugeordnet sind, die geteilte Kommunikationskanäle nutzen, und Sätzen von Coderessourcen, die Kommunikationen zugeordnet sind, die zugeordnete Kommunikationskanäle nutzen, gelten alle Coderessourcen des Teilsatzes von Coderessourcen, die für Kommunikationstransportkanäle verfügbar sind, anfangs als verfügbar sowohl für Kommunikationen, die geteilte Transportkanäle nutzen, als auch für Kommunikationen, die zugeordnete Transportkanäle nutzen;
- durch den geteilten Kanal das Nutzen aller Codes, die keinen Anrufen zugewiesen oder durch keine Anrufe blockiert sind, die eine Übertragung auf zugeordneten Kanälen nutzen;
- Empfangen einer Coderessourcen-Verzichtsnachricht für den besagten neuen Anruf;
- Aktualisieren des ersten Codesatzes durch Hinzufügen der in Bezug auf den besagten neuen Anruf abgetretenen Coderessourcen;
- Identifizieren, welche Codes jedes Mal durch Anrufe via zugeordnetem Kanal blockiert sind, wenn das Netzwerkelement (101) eine Zuweisungs-, Freigabe- oder Neukonfigurationsanweisung empfängt, und die verfügbaren Codes genutzt werden, um Daten an die Funkendgeräte zu senden, die den geteilten Kanal nutzen.

2. Verfahren nach Anspruch 1, weiterhin umfassend den Schritt des Bestimmens (402) eines zweiten Codesatzes als Teilsatz des ersten Codesatzes, wobei der besagte zweite Codesatz keine Coderessourcen beinhaltet, die zuvor Anrufen zugewiesen oder von Anrufen blockiert wurden, die eine Übertragung auf zugeordneten Kommunikationskanälen nutzen, und wobei die besagten mindestens einigen der zugewiesenen Coderessourcen im besagten zweiten Codesatz ausgewählt werden.

3. Verfahren nach einem beliebigen der Ansprüche 1 oder 2, weiterhin umfassend den Schritt des Definierens (403) eines dritten Codesatzes, der sich nicht mit dem ersten Codesatz überschneidet und Codes enthält, die gemeinsamen Übertragungskanälen vorbehalten sind.

4. Verfahren nach einem beliebigen der Ansprüche 1 oder 2, weiterhin umfassend den Schritt des Sendens einer Konfigurationsnachricht, die Informationen umfasst, die den besagten ersten Codesatz identifizieren.

5. Verfahren zum Verwalten von Coderessourcen in einem Code-Division-Multiple-Access-Funkkommunikations-Infrastrukturnetzwerk (100), umfassend eine Vielzahl von Basisstationen (102), die fähig sind, mit Funkendgeräten (115) über Funk zu kommunizieren, und Mittel zum Steuern der besagten Basisstationen (101), wobei Anrufe zwischen dem Infrastrukturnetzwerk (100) und Funkendgeräten Coderessourcen in einem Pool von Coderessourcen nutzen, und wobei mindestens einige der besagten Anrufe eine Übertragung auf geteilten Kommunikationskanälen oder eine Übertragung auf zugeordneten Kommunikationskanälen nutzen können, wobei das Verfahren folgende Schritte umfasst:
- Empfangen (501) einer Konfigurationsnachricht, die einen ersten Codesatz definiert, der ein Teilsatz des besagten Pools von Coderessourcen ist, wobei der besagte erste Codesatz Coderessourcen umfasst, die für Anrufe verfügbar sind, die eine Übertragung auf geteilten Kommunikationskanälen nutzen;
- Nutzen (502) der Coderessourcen des ersten Codesatzes für Anrufe, die eine Übertragung auf geteilten Kommunikationskanälen nutzen;
- Empfangen (503) einer Coderessourcen-Zuweisungsnachricht für einen neuen Anruf, der eine Übertragung auf zugeordneten Kommunikationskanälen nutzt, wobei mindestens einige der dem neuen Anruf zugewiesenen Coderessourcen im ersten Codesatz ausgewählt werden;
- Aktualisieren (504) des ersten Codesatzes durch Entfernen der dem neuen Anruf zugewiesenen Coderessourcen,
**dadurch gekennzeichnet, dass** das Verfahren weiterhin Folgendes umfasst:
- um jegliche feste oder anfängliche Partitionierung des Teilsatzes der Coderessourcen zu vermeiden, die verfügbar sind für Kommunikationstransportkanäle in Sätzen von Coderessourcen, die Kommunikationen zugeordnet sind, die geteilte Kommunikationskanäle nutzen, und Sätzen von Coderessourcen, die Kommunikationen zugeordnet sind, die zugeordnete Kommunikationskanäle nutzen, gelten alle Coderessourcen des Teilsatzes von Coderessourcen, die für Kommunikationstransportkanäle verfügbar sind, anfangs als verfügbar sowohl für Kommunikationen, die geteilte Transportkanäle nutzen, als auch für Kommunikationen, die zugeordnete Transportkanäle nutzen;
- durch den geteilten Kanal das Nutzen aller Codes, die keinen Anrufen zugewiesen oder durch keine Anrufe blockiert sind, die eine Übertragung auf zugeordneten Kanälen nutzen;
- Empfangen (505) einer Coderessourcen-Verzichtsnachricht für den besagten neuen Anruf;
- Aktualisieren (506) des ersten Codesatzes durch Hinzufügen der in Bezug auf den besagten neuen Anruf abgetretenen Coderessourcen;
- wobei eine Basisstation (102) identifiziert, welche Codes jedes Mal durch Anrufe via zugeordnetem Kanal blockiert sind, wenn die Basisstation (102) eine Zuweisungs-, Freigabe- oder Neukonfigurationsanweisung empfängt, und die verfügbaren Codes genutzt werden, um Daten an die Funkendgeräte zu senden, die den geteilten Kanal nutzen.

6. Verfahren nach einem beliebigen der vorstehenden Ansprüche, wobei die Codes orthogonale Spreizcodes variabler Länge sind.

7. Verfahren nach einem beliebigen der vorstehenden Ansprüche, wobei die Codes im ersten Codesatz einen gemeinsamen Spreizfaktor teilen.

8. Netzwerkelement (101) (101) zum Verwalten von Coderessourcen für ein Code-Division-Multiple-Access-Funkkommunikations-Infrastrukturnetzwerk (100), wobei das Netzwerkelement, das fähig ist, Anrufe zwischen dem Infrastrukturnetzwerk (100) und Funkendgeräten (115) (115) zu steuern, wobei die besagten Anrufe Coderessourcen in einem Pool von Coderessourcen nutzen, und wobei mindestens einige der besagten Anrufe eine Übertragung auf geteilten Kommunikationskanälen oder eine Übertragung auf zugeordneten Kommunikationskanälen nutzen können, wobei das Netzwerkelement Folgendes umfasst:
- Mittel zum Definieren (103) eines ersten Codesatzes als Teilsatz des besagten Pools von Coderessourcen, wobei der besagte erste Codesatz Coderessourcen umfasst, die für Anrufe verfügbar sind, die eine Übertragung auf geteilten Kommunikationskanälen nutzen;
- Mittel zum Zuweisen (104) von Coderessourcen zu einem neuen Anruf, wobei das Mittel zum Zuweisen angepasst ist, um auf den Empfang einer Anfrage für den Aufbau des neuen Anrufs zu antworten, der eine Übertragung auf zugeordneten Kommunikationskanälen nutzt, wobei mindestens einige der zugewiesenen Coderessourcen im besagten ersten Codesatz ausgewählt werden;
- Mittel, um durch den geteilten Kanal alle Codes zu nutzen, die keinen Anrufen zugewiesen oder durch keine Anrufe blockiert sind, die eine Übertragung auf zugeordneten Kanälen nutzen;
**dadurch gekennzeichnet, dass**
das Netzwerkelement weiterhin Folgendes umfasst:
- Mittel, die angeordnet sind, um jegliche feste oder anfängliche Partitionierung des Teilsatzes der Coderessourcen zu vermeiden, die verfügbar sind für Kommunikationstransportkanäle in Sätzen von Coderessourcen, die Kommunikationen zugeordnet sind, die geteilte Kommunikationskanäle nutzen, und Sätzen von Coderessourcen, die Kommunikationen zugeordnet sind, die zugeordnete Kommunikationskanäle nutzen,
- Mittel, die angeordnet sind, um anfangs alle Coderessourcen des Teilsatzes von Coderessourcen, die für Kommunikationstransportkanäle verfügbar sind, als verfügbar einzustufen, sowohl für Kommunikationen, die geteilte Transportkanäle nutzen, als auch für Kommunikationen, die zugeordnete Transportkanäle nutzen;
- Mittel, die angeordnet sind zum Identifizieren, welche Codes jedes Mal durch Anrufe via zugeordnetem Kanal blockiert sind, wenn das Netzwerkelement eine Zuweisungs-, Freigabe- oder Neukonfigurationsanweisung empfängt, und zum Nutzen der verfügbaren Codes, um Daten an die Funkendgeräte zu senden, die den geteilten Kanal nutzen.

9. Netzwerkelement nach Anspruch 8, weiterhin umfassend: Mittel zum Bestimmen (109) eines zweiten Codesatzes als Teilsatz des ersten Codesatzes, wobei der besagte zweite Codesatz keine Coderessourcen beinhaltet, die zuvor Anrufen zugewiesen oder von Anrufen blockiert wurden, die eine Übertragung auf zugeordneten Kommunikationskanälen nutzen, und wobei die besagten mindestens einigen der zugewiesenen Coderessourcen im besagten zweiten Codesatz ausgewählt werden.

10. Netzwerkelement nach einem beliebigen der Ansprüche 8 oder 9, weiterhin umfassend: Mittel zum Definieren (110) eines dritten Codesatzes, der sich nicht mit dem ersten Codesatz überschneidet und Codes enthält, die gemeinsamen Übertragungskanälen vorbehalten sind.

11. Basisstation (102), die fähig ist, über Funk mit Funkendgeräten zu kommunizieren, für ein Code-Division-Multiple-Access-Funkkommunikations-Infrastrukturnetzwerk (100), weiterhin umfassend ein Netzwerkelement zum Steuern der besagten Basisstation (102), wobei Anrufe zwischen dem Infrastrukturnetzwerk (100) und Funkendgeräten Coderessourcen in einem Pool von Coderessourcen nutzen, und wobei mindestens einige der besagten Anrufe eine Übertragung auf geteilten Kommunikationskanälen oder eine Übertragung auf zugeordneten Kommunikationskanälen nutzen können, wobei die Basisstation (102) Folgendes umfasst:
- Mittel zum Empfangen (105) einer Konfigurationsnachricht, die einen ersten Codesatz definiert, der ein Teilsatz des besagten Pools von Coderessourcen ist, wobei der besagte erste Codesatz Coderessourcen umfasst, die für Anrufe verfügbar sind, die eine Übertragung auf geteilten Kommunikationskanälen nutzen;
- Mittel zum Nutzen (106) der Coderessourcen des ersten Codesatzes für Anrufe, die eine Übertragung auf geteilten Kommunikationskanälen nutzen;
- Mittel zum Empfangen (107) einer Coderessourcen-Zuweisungsnachricht für einen neuen Anruf, der eine Übertragung auf zugeordneten Kommunikationskanälen nutzt, wobei mindestens einige der dem neuen Anruf zugewiesenen Coderessourcen im ersten Codesatz ausgewählt werden;
- Mittel zum Aktualisieren (108) des ersten Codesatzes durch Entfernen der dem neuen Anruf zugewiesenen Coderessourcen,
- Mittel, um durch den geteilten Kanal alle Codes zu nutzen, die keinen Anrufen zugewiesen oder durch keine Anrufe blockiert sind, die eine Übertragung auf zugeordneten Kanälen nutzen;
**dadurch gekennzeichnet, dass** die Basisstation weiterhin Folgendes umfasst:
- Mittel, die angeordnet sind, um jegliche feste oder anfängliche Partitionierung des Teilsatzes der Coderessourcen zu vermeiden, die verfügbar sind für Kommunikationstransportkanäle in Sätzen von Coderessourcen, die Kommunikationen zugeordnet sind, die geteilte Kommunikationskanäle nutzen, und Sätzen von Coderessourcen, die Kommunikationen zugeordnet sind, die zugeordnete Kommunikationskanäle nutzen,
- Mittel, die angeordnet sind, um anfangs alle Coderessourcen des Teilsatzes von Coderessourcen, die für Kommunikationstransportkanäle verfügbar sind, als verfügbar einzustufen, sowohl für Kommunikationen, die geteilte Transportkanäle nutzen, als auch für Kommunikationen, die zugeordnete Transportkanäle nutzen;
- Mittel zum Empfangen (111) einer Coderessourcen-Verzichtsnachricht für den besagten neuen Anruf;
- Mittel zum Aktualisieren (112) des ersten Codesatzes durch Hinzufügen der in Bezug auf den besagten neuen Anruf abgetretenen Coderessourcen,
- Mittel zum Identifizieren, welche Codes jedes Mal durch Anrufe via zugeordnetem Kanal blockiert sind, wenn die Basisstation (102) eine Zuweisungs-, Freigabe- oder Neukonfigurationsanweisung empfängt, und zum Nutzen der verfügbaren Codes, um Daten an die Funkendgeräte zu senden, die den geteilten Kanal nutzen.

12. Basisstation (102) nach Anspruch 11, wobei die Codes orthogonale Spreizcodes variabler Länge sind, wobei die Codes im ersten Codesatz einen gemeinsamen Spreizfaktor teilen.

13. Computerprogrammprodukt (113), das auf einem Speichermedium gespeichert ist, umfassend ausführbare Programmmittel zum Veranlassen eines Informationsprozessors in einem Netzwerkelement, ein Verfahren nach einem beliebigen der vorstehenden Ansprüche 1 bis 4 auszuführen, wenn das Programm auf dem Netzwerkelement läuft.

14. Computerprogrammprodukt (114), das auf einem Speichermedium gespeichert ist, umfassend ausführbare Programmmittel zum Veranlassen eines Informationsprozessors in einer Basisstation (102), ein Verfahren nach einem beliebigen der vorstehenden Ansprüche 5 bis 7 auszuführen, wenn das Programm auf der Basisstation (102) läuft.

## Revendications

1. Procédé de gestion des ressources de code dans un réseau d'infrastructure (100) de radiocommunication à accès multiple par répartition en code, comprenant un élément de réseau (101) capable de commander les appels entre le réseau d'infrastructure (100) et des terminaux hertziens (115), lesdits appels utilisant des ressources de code dans un groupe de ressources de code, et au moins certains desdits appels pouvant utiliser la transmission sur des canaux de communication partagés ou la transmission sur des canaux de communication dédiés, le procédé comprenant les étapes suivantes :
- définir (401) un premier ensemble de codes en tant que sous-ensemble dudit groupe de ressources de code, ledit premier ensemble de codes comprenant les ressources de code disponibles pour les appels qui utilisent la transmission sur des canaux de communication partagés ;
- en réponse à une demande d'établissement d'un nouvel appel qui utilise la transmission sur des canaux de communication dédiés, attribuer (402) des ressources de code au nouvel appel, au moins certaines des ressources de code attribuées étant choisies à l'intérieur dudit premier ensemble de codes, **caractérisé en ce que** le procédé comprend en outre :
- en vue d'éviter tout partitionnement fixe ou initial du sous-ensemble de ressources de code disponibles pour les canaux de transport de communication dans les ensembles de ressources de code dédiées aux communications utilisant des canaux de communication partagés et les ensembles de ressources de code dédiées aux communications utilisant des canaux de communication dédiés, toutes les ressources de code du sous-ensemble de ressources de code disponibles pour les canaux de transport de communication sont initialement considérées disponibles à la fois pour les communications utilisant des canaux de communication partagés et les communications utilisant des canaux de communication dédiés ;
- utiliser, par le canal partagé, tous les codes qui ne sont pas attribués à ou bloqués par des appels qui utilisent la transmission sur des canaux dédiés ;
- recevoir un message d'abandon de la ressource de code pour ledit nouvel appel ;
- mettre à jour le premier ensemble de codes en ajoutant les ressources de code abandonnées en rapport avec ledit nouvel appel ;
- identifier quels codes sont bloqués par les canaux dédiés à chaque fois que l'élément de réseau (101) reçoit une procédure d'attribution, de libération ou de reconfiguration, et les codes disponibles sont utilisés pour envoyer des données aux terminaux hertziens en utilisant le canal partagé.

2. Procédé selon la revendication 1, comprenant en outre l'étape consistant à déterminer (402) un deuxième ensemble de codes en tant que sous-ensemble du premier ensemble de codes, ledit deuxième ensemble de codes n'incluant pas les ressources de code précédemment attribuées aux ou bloquées par les appels qui utilisent la transmission sur des canaux de communication dédiés, et lesdites au moins certaines des ressources de code attribuées étant choisies à l'intérieur dudit deuxième ensemble de codes.

3. Procédé selon l'une quelconque des revendications 1 ou 2, comprenant en outre l'étape consistant à définir (403) un troisième ensemble de codes, lequel ne chevauche pas le premier ensemble de codes et contient des codes réservés pour les canaux de transmission communs.

4. Procédé selon l'une quelconque des revendications 1 ou 2, comprenant en outre l'étape consistant à envoyer un message de configuration comprenant des informations identifiant ledit premier ensemble de codes.

5. Procédé de gestion des ressources de code dans un réseau d'infrastructure (100) de radiocommunication à accès multiple par répartition en code, comprenant une pluralité de stations de base (102) capables de communiquer par voie hertzienne avec des terminaux hertziens (115) et des moyens pour commander lesdites stations de base (101), les appels entre le réseau d'infrastructure (100) et les terminaux hertziens utilisant des ressources de code dans un groupe de ressources de code, et au moins certains desdits appels pouvant utiliser la transmission sur des canaux de communication partagés ou la transmission sur des canaux de communication dédiés, le procédé comprenant les étapes suivantes :
- recevoir (501) un message de configuration définissant un premier ensemble de codes qui est un sous-ensemble dudit groupe de ressources de code, ledit premier ensemble de codes comprenant les ressources de code disponibles pour les appels qui utilisent la transmission sur des canaux de communication partagés ;
- utiliser (502) les ressources de code du premier ensemble de codes pour les appels qui utilisent la transmission sur des canaux de communication partagés ;
- recevoir (503) un message d'attribution de ressource de code pour un nouvel appel qui utilise la transmission sur des canaux de communication dédiés, au moins certaines des ressources de code attribuées au nouvel appel étant choisies à l'intérieur du premier ensemble de codes ;
- mettre à jour (504) le premier ensemble de codes en supprimant les ressources de code attribuées au nouvel appel,
**caractérisé en ce que** le procédé comprend en outre :
- en vue d'éviter tout partitionnement fixe ou initial du sous-ensemble de ressources de code disponibles pour les canaux de transport de communication dans les ensembles de ressources de code dédiées aux communications utilisant des canaux de communication partagés et les ensembles de ressources de code dédiées aux communications utilisant des canaux de communication dédiés, toutes les ressources de code du sous-ensemble de ressources de code disponibles pour les canaux de transport de communication sont initialement considérées disponibles à la fois pour les communications utilisant des canaux de communication partagés et les communications utilisant des canaux de communication dédiés ;
- utiliser, par le canal partagé, tous les codes qui ne sont pas attribués à ou bloqués par des appels qui utilisent la transmission sur des canaux dédiés ;
- recevoir (505) un message d'abandon de la ressource de code pour ledit nouvel appel ;
- mettre à jour (506) le premier ensemble de codes en ajoutant les ressources de code abandonnées en rapport avec ledit nouvel appel ;
- une station de base (102) identifiant quels codes sont bloqués par les canaux dédiés à chaque fois que la station de base (102) reçoit une procédure d'attribution, de libération ou de reconfiguration, et les codes disponibles sont utilisés pour envoyer des données aux terminaux hertziens en utilisant le canal partagé.

6. Procédé selon l'une quelconque des revendications précédentes, selon lequel les codes sont des codes à facteur d'étalement variable orthogonal.

7. Procédé selon l'une quelconque des revendications précédentes, selon lequel les codes dans le premier ensemble de codes partagent un facteur d'étalement commun.

8. Élément de réseau (101) (101) pour gérer des ressources de code pour un réseau d'infrastructure (100) de radiocommunication à accès multiple par répartition en code, l'élément de réseau (101) étant capable de commander les appels entre le réseau d'infrastructure (100) et des terminaux hertziens (115) (115), lesdits appels utilisant des ressources de code dans un groupe de ressources de code, et au moins certains desdits appels pouvant utiliser la transmission sur des canaux de communication partagés ou la transmission sur des canaux de communication dédiés, l'élément de réseau comprenant :
- des moyens pour définir (103) un premier ensemble de codes en tant que sous-ensemble dudit groupe de ressources de code, ledit premier ensemble de codes comprenant les ressources de code disponibles pour les appels qui utilisent la transmission sur des canaux de communication partagés ;
- des moyens pour attribuer (402) des ressources de code au nouvel appel, les moyens pour attribuer étant adaptés pour répondre à la réception d'une demande d'établissement du nouvel appel qui utilise la transmission sur des canaux de communication dédiés, au moins certaines des ressources de code attribuées étant choisies à l'intérieur du premier ensemble de codes ;
- des moyens pour utiliser par le canal partagé tous les codes qui ne sont pas attribués à ou bloqués par des appels qui utilisent la transmission sur des canaux dédiés ; **caractérisé en ce que**
l'élément de réseau comprend en outre :
des moyens conçus pour éviter tout partitionnement fixe ou initial du sous-ensemble de ressources de code disponibles pour les canaux de transport de communication dans les ensembles de ressources de code dédiées aux communications utilisant des canaux de communication partagés et les ensembles de ressources de code dédiées aux communications utilisant des canaux de communication dédiés,
des moyens conçus pour considérer initialement que toutes les ressources de code du sous-ensemble de ressources de code disponibles pour les canaux de transport de communication sont disponibles à la fois pour les communications utilisant des canaux de communication partagés et les communications utilisant des canaux de communication dédiés ;
- des moyens conçus pour identifier les codes qui sont bloqués par les appels sur canal dédié à chaque fois que l'élément de réseau reçoit une procédure d'attribution, de libération ou de reconfiguration, et pour utiliser les codes disponibles pour envoyer des données aux terminaux hertziens en utilisant le canal partagé.

9. Élément de réseau selon la revendication 8, comprenant en outre : des moyens pour déterminer (109) un deuxième ensemble de codes en tant que sous-ensemble du premier ensemble de codes, ledit deuxième ensemble de codes n'incluant pas les ressources de code précédemment attribuées aux ou bloquées par les appels qui utilisent la transmission sur des canaux de communication dédiés, et lesdites au moins certaines des ressources de code attribuées étant choisies à l'intérieur dudit deuxième ensemble de codes.

10. Élément de réseau selon l'une quelconque des revendications 8 ou 9, comprenant en outre : des moyens pour définir (110) un troisième ensemble de codes, lequel ne chevauche pas le premier ensemble de codes et contient des codes réservés pour les canaux de transmission communs.

11. Station de base (102) capable de communiquer par voie hertzienne avec les terminaux hertziens pour un réseau d'infrastructure (100) de radiocommunication à accès multiple par répartition en code, comprenant en outre un élément de réseau pour commander ladite station de base (102), les appels entre le réseau d'infrastructure (100) et les terminaux hertziens utilisant des ressources de code dans un groupe de ressources de code, et au moins certains desdits appels pouvant utiliser la transmission sur des canaux de communication partagés ou la transmission sur des canaux de communication dédiés, la station de base (102) comprenant :
- des moyens pour recevoir (105) un message de configuration définissant un premier ensemble de codes qui est un sous-ensemble dudit groupe de ressources de code, ledit premier ensemble de codes comprenant les ressources de code disponibles pour les appels qui utilisent la transmission sur des canaux de communication partagés ;
- des moyens pour utiliser (106) les ressources de code du premier ensemble de codes pour les appels qui utilisent la transmission sur des canaux de communication partagés ;
- des moyens pour recevoir (107) un message d'attribution de ressource de code pour un nouvel appel qui utilise la transmission sur des canaux de communication dédiés, au moins certaines des ressources de code attribuées au nouvel appel étant choisies à l'intérieur du premier ensemble de codes ;
- des moyens pour mettre à jour (108) le premier ensemble de codes en supprimant les ressources de code attribuées au nouvel appel,
- des moyens pour utiliser, par le canal partagé, tous les codes qui ne sont pas attribués à ou bloqués par des appels qui utilisent la transmission sur des canaux dédiés ; **caractérisé en ce que** la station de base comprend en outre :
des moyens conçus pour éviter tout partitionnement fixe ou initial du sous-ensemble de ressources de code disponibles pour les canaux de transport de communication dans les ensembles de ressources de code dédiées aux communications utilisant des canaux de communication partagés et les ensembles de ressources de code dédiées aux communications utilisant des canaux de communication dédiés,
des moyens conçus pour considérer initialement que toutes les ressources de code du sous-ensemble de ressources de code disponibles pour les canaux de transport de communication sont disponibles à la fois pour les communications utilisant des canaux de communication partagés et les communications utilisant des canaux de communication dédiés ;
- des moyens pour recevoir (111) un message d'abandon de la ressource de code pour ledit nouvel appel ;
- des moyens pour mettre à jour (112) le premier ensemble de codes en ajoutant les ressources de code abandonnées en rapport avec ledit nouvel appel ;
- des moyens pour identifier quels codes sont bloqués par les canaux dédiés à chaque fois que la station de base (102) reçoit une procédure d'attribution, de libération ou de reconfiguration, et pour utiliser les codes disponibles pour envoyer des données aux terminaux hertziens en utilisant le canal partagé.

12. Station de base (102) selon la revendication 11, avec laquelle les codes sont des codes à facteur d'étalement variable orthogonal, les codes dans le premier ensemble de codes partageant un facteur d'étalement commun.

13. Produit de programme informatique (113) stocké sur un support de stockage, comprenant des moyens de programme exécutables pour amener un processeur d'informations à l'intérieur d'un élément de réseau à mettre en oeuvre un procédé selon l'une quelconque des revendications précédentes 1 à 4 lorsque le programme est exécuté sur l'élément de réseau.

14. Produit de programme informatique (114) stocké sur un support de stockage, comprenant des moyens de programme exécutables pour amener un processeur d'informations à l'intérieur d'une station de base (102) à mettre en oeuvre un procédé selon l'une quelconque des revendications précédentes 5 à 7 lorsque le programme est exécuté sur la station de base (102).
